# EUROPEAN PATENT SPECIFICATION

(11) **EP 3 604 068 B1**
(45) Date of publication and mention of the grant of the patent: **04.05.2022**
(21) Application number: 18770324.4
(22) Date of filing: 15.03.2018
(51) Int. Cl.: B60W 30/18, B62D 15/02, G08G 1/14, B60W 30/06, G06K 9/00

(54) **VEHICLE CONTROL METHOD, DEVICE AND STORAGE MEDIUM**
FAHRZEUGSTEUERUNGSVERFAHREN, VORRICHTUNG UND SPEICHERMEDIUM
PROCÉDÉ DE COMMANDE DE VÉHICULE, DISPOSITIF ET SUPPORT D'INFORMATIONS

(30) Priority: 21.03.2017 CN 201710168826
(43) Date of publication of application: 05.02.2020
(73) Proprietor: Tencent Technology (Shenzhen) Company Limited, Shenzhen, Guangdong 518057 (CN)
(72) Inventor: JIE, Zongchang, Shenzhen Guangdong 518057 (CN); CHEN, Menglin, Shenzhen Guangdong 518057 (CN)
(74) Representative: AWA Sweden AB
(86) International application number: PCT/CN2018/079149
(87) International publication number: WO 2018/171506

(56) References cited:
- CN-A- 101 412 401
- CN-A- 103 700 277
- CN-A- 104 742 881
- CN-A- 106 043 305
- CN-A- 108 010 373
- DE-A1-102014 001 554
- DE-A1-102014 224 454
- JP-A- 2000 149 198
- JP-A- 2011 016 401
- US-A1- 2013 315 443
- US-A1- 2015 039 173
- US-A1- 2015 039 211
- US-A1- 2015 149 022
- US-A1- 2017 028 989

## Description

### FIELD OF THE TECHNOLOGY

This disclosure relates to the field of communications technologies, and specifically, to a vehicle control method and apparatus, and a storage medium.

### BACKGROUND OF THE DISCLOSURE

In daily life, there is a general case that vehicle parking spaces in an open ground parking lot are not sufficient for use. In this case, a driver usually temporarily parks a vehicle around a vehicle parking space and waits for a parking space. During the waiting, the driver cannot predict a waiting time, and therefore, the drivers can only leave the vehicle after parking the vehicle. However, parked at a temporary space, the vehicle may probably block some vehicles from driving away from or passing through the vehicle parking space.

D1 (US 20150039173 A1) at best discloses that an approach is provided for processing and/or facilitating a processing of sensor information associated with one or more parked vehicles to determine one or more parking conditions, wherein at least one subset of the one or more parked vehicles is configured with one or more automatic movement systems. The approach involves determining at least one adjustment to the one or more of the parked vehicles based, at least in part, on the one or more parking conditions. The approach further involves causing, at least in part, (a) a presentation of at least one notification regarding the one or more parking conditions, the at least one adjustment, or a combination thereof (b) an activation of the one or more automatic movement systems to perform the at least one adjustment; or (c) a combination thereof. D1 discloses the features of the preamble of claim 1.

D2 (DE 102014001554 A1) at best discloses a method for automatically parking a vehicle in a parking area having a plurality of parking spaces, with the following steps: allocation of a specific parking space for the motor vehicle by the control device; automatic or controlled by the control device driving the vehicle to the specific parking space; characterized by the following steps: providing at least one piece of environmental information for the control device; assessment of the parking spaces on the basis of the at least one environmental information item; and if necessary, reparking a vehicle located in a parking space rated as suboptimal to a parking space rated as optimal by the control device.

D3 (US 20150039211 A1) at best discloses a method and system for parking assistance for a vehicle, wherein the parking of said vehicle on a parking space at least partly occupied by a second vehicle is enabled by transmitting a maneuver request to the second vehicle. The method includes the steps of: allocating a priority to the driver of the first vehicle, wherein said priority implements a classification of said driver with respect to the extent to which the driver is entitled to the prioritized use of the parking space; and transmitting the maneuver request to the second vehicle based on said priority.

D4 (US 20150149022 A1) at best discloses a method of moving autonomous or driverless vehicles being parked or accessed in a parking area. The vehicles are parked in columns spaced too closely to allow drivers to enter or exit. The movements of the vehicles are coordinated by a central computer which computes a set of movements, transmits them to the vehicles, and commands and controls the execution. Multiple vehicles are moved sequentially or simultaneously to the computed locations for access, storage or exit. Sensors in the vehicles can transmit relative location information to the central computer to be used in the computations. Vehicles can be shuffled from column to column or from the front to the rear of a column to allow access. Temporary aisles can be formed for exit by vehicles or for access for loading or unloading.

D5 (DE 102014224454 A1) at best relates to a method for operating a vehicle (10), wherein the vehicle (10) is set up to carry out a driving maneuver autonomously and wherein the vehicle (10) communicates with other vehicles (1, 2, 3, 4, 5) and / or exchanges information about free parking spaces with a central device (28), the vehicle (10) carrying out an autonomously carried out reparking when the vehicle (10) has been parked on a parking space (24) and another parking space (26) becomes free , which is closer to an exit (14), a predetermined pick-up position, a location (16) of the driver and / or a place of residence (17) of the driver or if the vehicle was parked on a parking space (24), this parking space (24 ) is to be released on request. Further aspects of the invention relate to a computer program, a mobile device and a vehicle (10) which are set up to carry out the method.

D6 (JP 2000149198 A) at best discloses a GPS measurement part which is carried by a walker 1 and gathers walker position measurement data needed to measure the current position of the walker 1, an accelerometer part which measures acceleration, and a portable transmitter 2 which obtains walker information composed of the position and behavior of the walker from the walker position measurement data and walker acceleration and gives a notice of the walker information are used. Further, the walker detection system for the vehicle has a GPS measurement part which is mounted on the vehicle which measures the current position, a receiver which receives the walker information from the portable transmitter 2 directly or indirectly through a base station 3, a decision part which decides the walker information is walker information needed for the traveling of the vehicle 4, and an information presentation part which presents the decision result.

### SUMMARY

Embodiments of this disclosure provide a vehicle control solution, so that a vehicle can autonomously switch between a temporary parking mode and a fully autonomous driving mode, and not only driving of the vehicle can be autonomously controlled, but also power consumption can be reduced.

According to one aspect of this disclosure, a vehicle control method is provided. The vehicle control method is applied to a vehicle control apparatus, and includes: detecting, when a first vehicle arrives at a parking lot, whether there is a vacant vehicle parking space in the parking lot; obtaining vacant spaces in the parking lot, when it is detected that there is no vacant vehicle parking space in the parking lot; selecting, according to a size of the first vehicle, a first temporary parking space from the vacant spaces for parking, and moving the first vehicle to the first temporary parking space to perform an operation of enabling the temporary parking mode of the first vehicle; enabling a temporary parking mode of the first vehicle, in the temporary parking mode, an engine of the first vehicle being in a sleep mode, and a detection sensor of the first vehicle being in an enabled mode; enabling a fully autonomous driving mode of the first vehicle, when a trigger feature within a preset range of the first vehicle is obtained by using the detection sensor; and activating the engine and moving the first vehicle in the fully autonomous driving mode, wherein the method comprises outputting voice prompt information, when it is detected, by using the detection sensor of the first vehicle, that a person approaches, the voice prompt information being used for prompting the first vehicle to move for avoidance.

According to another aspect of this disclosure, a vehicle control apparatus is provided. The vehicle control apparatus includes a processor and a memory, the memory storing a computer-readable instruction that can enable the processor to perform the method according to any one of the aspects in this disclosure.

According to another aspect of this disclosure, a non-volatile storage medium is provided. The non-volatile storage medium stores one or more programs, the one or more programs including instructions, and when being executed by a vehicle control device, the instructions causing the vehicle control device to execute the instructions of the vehicle control method according to any one of the aspects in this disclosure.

In conclusion, according to the vehicle control solution in this disclosure, a vehicle can switch between a temporary parking mode and a fully autonomous driving mode, so that not only movement of the vehicle can be autonomously controlled, but also power consumption can be reduced.

### BRIEF DESCRIPTION OF THE DRAWINGS

To describe the technical solutions in the embodiments of this disclosure or in the prior art more clearly, the following briefly introduces the accompanying drawings for describing the embodiments or the prior art. Apparently, the accompanying drawings in the following description show merely some embodiments of this disclosure, and a person of ordinary skill in the art may still derive other drawings from the accompanying drawings without creative efforts.
FIG. 1A is a schematic diagram of an application scenario according to some embodiments of this disclosure.
FIG. 1B is a flowchart of a vehicle control method according to an embodiment of this disclosure.
FIG. 2 is a flowchart of another vehicle control method according to an embodiment of this disclosure.
FIG. 3 is a flowchart of still another vehicle control method according to an embodiment of this disclosure.
FIG. 4 is a flowchart of still another vehicle control method according to an embodiment of this disclosure.
FIG. 5 is a flowchart of still another vehicle control method according to an embodiment of this disclosure.
FIG. 6 is a schematic structural diagram of a vehicle control apparatus according to an embodiment of this disclosure.
FIG. 7a is a schematic structural diagram of a movement activation module according to an embodiment of this disclosure.
FIG. 7b is a schematic structural diagram of another movement activation module according to an embodiment of this disclosure.
FIG. 8 is a schematic structural diagram of another vehicle control apparatus according to an embodiment of this disclosure.
FIG. 9 is a schematic structural diagram of still another vehicle control apparatus according to an embodiment of this disclosure.

### DESCRIPTION OF EMBODIMENTS

The following clearly and completely describes the technical solutions in the embodiments of this disclosure with reference to the accompanying drawings in the embodiments of this disclosure. Apparently, the described embodiments are some embodiments of this disclosure rather than all of the embodiments. All other embodiments obtained by a person of ordinary skill in the art based on the embodiments of this disclosure without creative efforts shall fall within the protection scope of this disclosure.

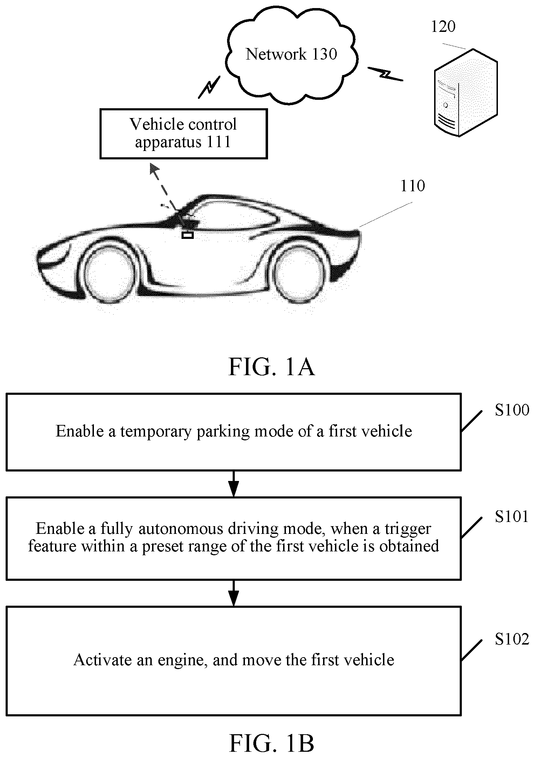

FIG. 1A is a schematic diagram of an application scenario according to some embodiments of this disclosure. As shown in FIG. 1A, a vehicle 110 in the application scenario may include a vehicle control apparatus 111. The vehicle control apparatus 111 may be various in-vehicle intelligent devices such as a trip computer built in the vehicle 110 or a detachable mobile device. This is not limited in this disclosure. The vehicle control apparatus 111 may communicate with a server 120 by using a network 130. For example, the vehicle control apparatus 111 may obtain content such as a route planning from the server 120.

The following describes a vehicle control method provided in the embodiments of this disclosure in details with reference to FIG. 1B.

FIG. 1B is a flowchart of the vehicle control method according to an embodiment of this disclosure. The manner shown in FIG. 1B may be performed, for example, in the vehicle control apparatus 111. The method may include the following steps:
S100. Enable a temporary parking mode of a first vehicle. In the temporary parking mode, an engine of the first vehicle is in a sleep mode, and a detection sensor of the first vehicle is in an enabled mode, to detect whether there is a trigger feature within a preset range of the first vehicle. Herein, the trigger feature is used to trigger a fully autonomous driving mode of the first vehicle.

In this embodiment of this disclosure, the first vehicle may be any motor vehicle, and when the first vehicle stops, the temporary parking mode of the first vehicle may be enabled. When the first vehicle parks at a first temporary parking space in a parking lot, the temporary parking mode of the first vehicle may be enabled. Located at a temporary parking space, the first vehicle may probably block other vehicles. The first vehicle may flexibly switch between the temporary parking mode and the fully autonomous driving mode, to resolve this problem.

In the temporary parking mode, the engine of the first vehicle is in the sleep mode, and the detection sensor of the first vehicle is in the enabled mode. The detection sensor includes but is not limited to an infrared sensor, radar, and a camera.

In an embodiment, the first vehicle stops at the first temporary parking space in the parking lot. The parking lot may be an open ground parking lot. When vehicle parking spaces in the open ground parking lot are not sufficient for use, the first vehicle may temporarily park near an occupied vehicle parking space (that is, a temporary parking space in this embodiment of this disclosure), to wait for a parking space. In an embodiment, the first vehicle stops at the first temporary parking space in the parking lot. Since the first vehicle parks for a short period of time, the first vehicle may temporarily park at the first temporary parking space. This is convenient for the first vehicle to move in and out, and can avoid that the first vehicle parks at a vehicle parking space and cannot move out of the vehicle parking space.

When the first vehicle parks at the first temporary parking space, after a drive leaves, the first vehicle enables the temporary parking mode. In the temporary parking mode, to ensure an endurance power capability and reduce power consumption of the first vehicle, the engine of the first vehicle is in the sleep mode, and only the detection sensor (for example, the infrared sensor) and the like is enabled.

S101. Enable a fully autonomous driving mode of the first vehicle, when a trigger feature within a preset range of the first vehicle is obtained by using the detection sensor. Herein, in step S101, the fully autonomous driving mode may be enabled by enabling a fully autonomous driving system.

The trigger feature includes at least one or more of the following features:
a startup feature of a second vehicle within the preset range;
a running feature of the second vehicle that is approaching the first vehicle within the preset range; and
a flash feature of the second vehicle within the preset range.

It should be noted that, the second vehicle in this embodiment of this disclosure is any vehicle other than the first vehicle.

In this embodiment of this disclosure, the first vehicle enables the temporary parking mode, and detects, by using the detection sensor of the first vehicle, whether there is the trigger feature within the preset range of the first vehicle. The preset range may be a maximum range that can be detected by the detection sensor.

In some embodiments, the trigger feature may include but is not limited to: the startup feature of the second vehicle within the preset range around the first vehicle, the running feature of the second vehicle, the flash feature of the second vehicle, and a biometric feature. The following describes a detection manner of each of the above-described trigger features as an example.

In an embodiment, a manner of detecting the startup feature of the second vehicle within the preset range of the first vehicle may be: detecting an energy change within the preset range by using the infrared sensor of the first vehicle. When the engine of the vehicle is started up, a given amount of energy is radiated. When the infrared sensor of the first vehicle detects the energy change, it indicates that there is the startup feature of the second vehicle. In another embodiment, a manner of detecting the startup feature of the second vehicle within the preset range of the first vehicle may be: detecting, by the first vehicle, the startup feature of the second vehicle by using a sound detection sensor. For example, if detecting a startup sound feature of an automobile, the sound detection sensor determines that there is the startup feature of the second vehicle.

In an embodiment, a manner of detecting the running feature of the second vehicle that is approaching the first vehicle within the first vehicle of the preset range may be: detecting, by using the radar and the camera of the first vehicle, whether there is the running feature of the second vehicle that is approaching the first vehicle within the preset range. For example, the first vehicle detects, by using the radar, that there is an obstacle that is approaching the first vehicle. Further, the first vehicle captures an image in real time by using the camera and analyzes the image, to learn that the obstacle is a vehicle.

In an embodiment, to detect the trigger feature, the first vehicle may enable detection sensors by levels. For example, the trigger feature is but not limited to, the running feature or the biometric feature of the second vehicle that is approaching the first vehicle within the preset range. Specifically, the plurality of detection sensors in this disclosure may include a first detection sensor and a second detection sensor. Herein, the first detection sensor may include, for example, one or more of an infrared sensor, a radar sensor, a sound sensor, and a light sensor. The second sensor may include but not limited to, a camera. When the first vehicle is in the temporary parking mode, in step S100, the first detection sensor may be enabled first. In other words, the second detection sensor is disabled in step S100. In this way, in step S101, whether an object approaches the first vehicle can be detected by using the first detection sensor. When it is detected that an object approaches the first vehicle, in step S101, the second detection sensor may be enabled. In this way, in step S101, whether the object is a vehicle or a person can be determined by using the second detection sensor. In other words, in step S101, whether there is the running feature or the biometric feature of the second vehicle that is approaching within the preset range is determined by using the second detection sensor. The fully autonomous driving mode of the first vehicle is enabled, when it is determined that the running feature or the biometric feature meets the trigger feature. In conclusion, according to the manner of enabling the detection sensors by levels in step S101, power consumption (for example, electric energy) of the first vehicle can be reduced.

A manner for detecting the flash feature of the second vehicle within the preset range may be: acquiring image information of a current environment in real time by using the camera of the first vehicle, and analyzing the image information, to obtain the flash feature of the second vehicle within the preset range. In an embodiment, the flash feature may be used to describe a flash mode of the second vehicle. A range of the flash mode may include, for example, a double flash, a left turn flash, and a right turn flash. In this case, the first vehicle may predict a moving path of the second vehicle according to the flash mode. In this case, the first vehicle may make avoidance according to the predicted moving path. For example, the first vehicle may move in advance according to the predicted moving path.

It should be noted that, the detection sensor in this embodiment of this disclosure includes but is not limited to the sensors described in the foregoing examples.

The trigger feature is used to trigger the fully autonomous driving mode of the first vehicle. In the fully autonomous driving mode, the engine of the first vehicle is in an activated mode. The first vehicle in the fully autonomous driving mode may cooperate with a global positioning system by depending on artificial intelligence, visual computing, radar, and a monitoring apparatus, and can autonomously and safely operate the first vehicle without any active operation performed by a person.

In an embodiment, the fully autonomous driving mode may be an L4 fully autonomous driving mode. L4 means the 4^{th} level, that is, fully autonomous driving, obtained by grading autonomous driving technologies by the New Car Assessment Program (NHTSA) and the Society of Automotive Engineers (SAE). At this level, a vehicle completes all driving operations by using an autonomous driving system, and the fully autonomous driving can be applicable to all roads and environmental conditions.

When the detection sensor of the first vehicle detects the trigger feature, the first vehicle may switch from the temporary parking mode to the fully autonomous driving mode.

S102. Activate the engine and move the first vehicle in the fully autonomous driving mode. In an embodiment, if the detection sensor detects that there is the trigger feature within the preset range of the first vehicle, in step S102, the fully autonomous driving mode of the first vehicle may be enabled. For example, when it is detected that another second vehicle approaches or the second vehicle is started up, the fully autonomous driving mode is entered immediately. For another example, when it is detected that another second vehicle flashes, the fully autonomous driving mode is entered immediately.

In an embodiment, the first vehicle may further detect, by using the infrared sensor, whether a living creature is approaching, and if it is detected that a living creature is approaching, the camera is enabled for identification. If a person is approaching (for example, a face feature exists), prompt information is immediately output by using a voice. The prompt information is used to prompt a user that the first vehicle may move. However, a flash indication of another vehicle is required. In this way, if another user needs to drive by the first vehicle, the another user may instruct the first vehicle to make avoidance by using a flash light of the vehicle. Further, when the camera of the first vehicle detects that the user enters an automobile, the first vehicle may autonomously enter the fully autonomous driving mode, or the first vehicle waits for a flash indication of the another vehicle, and then enters the fully autonomous driving mode.

The first vehicle enables the fully autonomous driving mode, and moves the first vehicle based on the fully autonomous driving mode. For example, when the first vehicle detects that another second vehicle is approaching or another second vehicle is started up around, the first vehicle immediately enters the fully autonomous driving mode. The first vehicle may invoke, by using the fully autonomous driving system, the camera to scan an on-site environment, for example, capture an image in real time by using the camera, perform image analysis on the captured image, and determine whether the first vehicle blocks a driving path of the second vehicle which is on the opposite side. For example, the first vehicle may invoke the radar to measure a width of a vacant space around the first vehicle, and determine, according to a width of the second vehicle and the width of the vacant space around the first vehicle, whether the first vehicle blocks the driving path of the second vehicle.

If the first vehicle blocks the driving path of the second vehicle, the first vehicle moves to find another temporary parking space. If it is detected that the first vehicle does not block the driving path of the second vehicle which is on the opposite side, the first vehicle may move to make avoidance according to a flash feature of the second vehicle which is on the opposite side, until the second vehicle which is on the opposite side is away from the preset range that can be perceived by the first vehicle.

Further, within a period of time afterwards (for example, 10s or 20s), if it is not detected that another vehicle or living creature enters the preset range, the temporary parking mode is entered again. In the temporary parking mode, the first vehicle needs to enable the detection sensor only, and the engine of the first vehicle is in the sleep mode. In this way, power consumption of the first vehicle can be reduced.

In an embodiment, the first vehicle moves to a temporary parking space in an open ground parking lot. Before the first vehicle re-enters the temporary parking mode, in the fully autonomous driving mode, the first vehicle may detect, by using the camera, whether there is a vacant vehicle parking space within the preset range. Specifically, the first vehicle captures an image of the preset range of the first vehicle by using the camera, and analyzes the image, to determine whether there is a feature of a vacant vehicle parking space in the image. For example, the feature of the vacant vehicle parking space is a rectangular box formed by lines.

If there is a vacant vehicle parking space, the first vehicle may autonomously plan a path for driving into the vacant vehicle parking space, and drive into the vacant vehicle parking space by using the path. After the first vehicle finally drives into a normal vehicle parking space, an entire parking process is complete. In this case, the vehicle control apparatus 111 may send a final parking space to a target user by using the autonomous driving system, and the target user may be a driver of the first vehicle.

In the dynamic parking process, if the first vehicle has an abnormal condition such as a collision with a motor vehicle or a living creature, the autonomous driving system may immediately send alarm information to the target user for emergence handling.

In this embodiment of this disclosure, according to the manner shown in FIG. 1B, a vehicle can autonomously switch between a temporary parking mode and a fully autonomous driving mode, so that not only movement of the vehicle can be autonomously controlled, but also power consumption can be reduced.

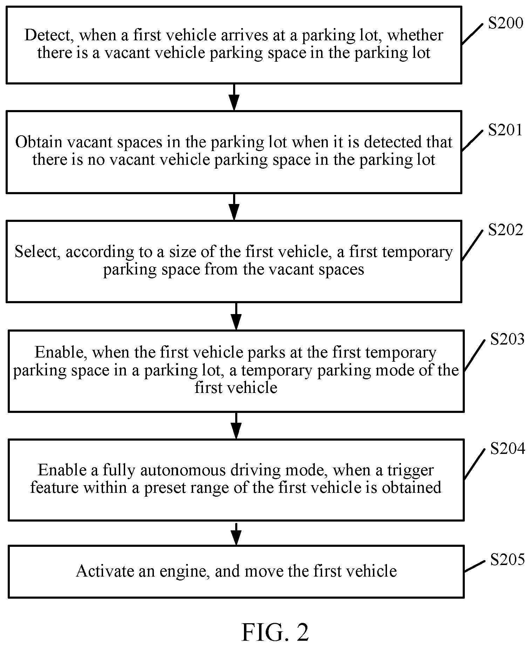

FIG. 2 is a flowchart of another vehicle control method according to an embodiment of this disclosure. The method shown in FIG. 2 may be performed, for example, in a vehicle control apparatus 111. As shown in FIG. 2, the vehicle control method provided in this embodiment of this disclosure includes the following steps:
S200. Detect, when a first vehicle arrives at a parking lot, whether there is a vacant vehicle parking space in the parking lot.

In this embodiment of this disclosure, the parking lot may be an open ground parking lot. After arriving at the open ground parking lot, a first vehicle detects a current environment by using a camera on the first vehicle, and determines whether there is a vacant vehicle parking space. Specifically, the first vehicle may capture an image of the current environment by using the camera, analyze the image of the current environment, and determine whether there is a feature of a vacant vehicle parking space in the current environment. For example, the feature of the vacant vehicle parking space includes a shape feature of a vehicle parking space that is planned in advance, for example, a rectangular box planned with white lines. If there is the feature of the vacant vehicle parking space, it indicates that there is the vacant vehicle parking space. Further, whether there is an obstacle in the vacant vehicle parking space may be detected by using radar on the first vehicle.

S201. Obtain vacant spaces in the parking lot, if there is no vacant vehicle parking space in the parking lot.

S202. Select, according to a size of the first vehicle, a first temporary parking space from the vacant spaces for parking.

In this embodiment of this disclosure, if the first vehicle detects that there is no vacant vehicle parking space in the parking lot, there is no feature of a vacant vehicle parking space in the current environment. The first vehicle obtains at least one vacant space in the parking lot by analyzing the image of the current environment that is captured by using the camera. The vacant space may be a location other than the vehicle parking space in the parking lot.

Further, the first vehicle may calculate a size of the vacant space by measuring the size of the vacant space by using the radar or the camera, for example, by analyzing an image of the vacant space that is captured by using the camera. In an embodiment, the first vehicle may select, according to the size of the first vehicle (for example, a length and a width of the first vehicle), the first temporary parking space from the at least one vacant space that is found. A criterion for selecting the first temporary parking space may be that, after the first vehicle parks at the first temporary parking space, another vehicle can still pass by the first vehicle. That is, a sufficiently wide spacing that has a width, for example, greater than a preset threshold, is reserved between the first vehicle and another parking vehicle.

S203. Enable a temporary parking mode of the first vehicle when the first vehicle parks at the first temporary parking space in the parking lot. In the temporary parking mode, an engine of the first vehicle is in a sleep mode, and a detection sensor of the first vehicle is in an enabled mode.

S204. Enable a fully autonomous driving mode of the first vehicle, when a trigger feature within a preset range of the first vehicle is obtained by using the detection sensor.

S205. Activate the engine and move the first vehicle in the fully autonomous driving mode.

For description of steps S203 to S205 in this embodiment of this disclosure, refer to steps S100 to S102 in the embodiment of FIG. 1B, and details are not described herein again.

According to the method shown in FIG. 2, a vehicle can autonomously switch between a temporary parking mode and a fully autonomous driving mode, and not only driving of the vehicle can be autonomously controlled, but also power consumption can be reduced.

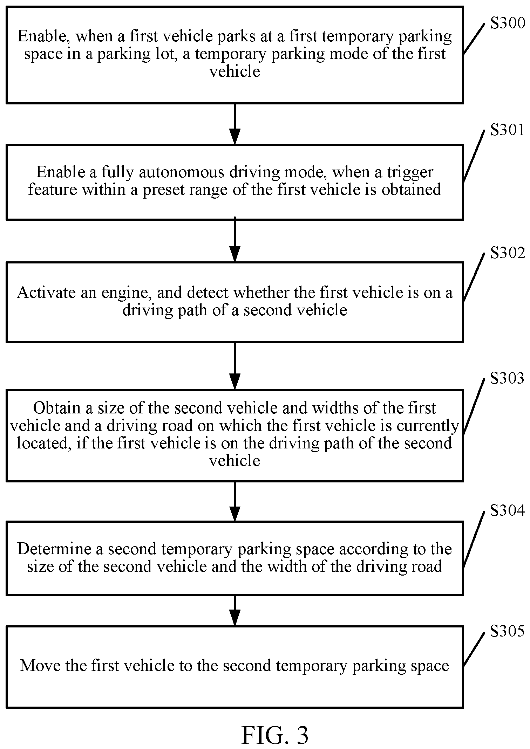

FIG. 3 is a flowchart of still another vehicle control method according to an embodiment of this disclosure. The method shown in FIG. 3 may be performed, for example, in a vehicle control apparatus 111. The method may include the following steps:
S300. Enable a temporary parking mode of a first vehicle when the first vehicle parks at a first temporary parking space in a parking lot, in the temporary parking mode, an engine of the first vehicle being in a sleep mode, and a detection sensor of the first vehicle being in an enabled mode.
S301. Enable a fully autonomous driving mode of the first vehicle, when a trigger feature within a preset range of the first vehicle is obtained by using the detection sensor.

For description of steps S300 to S301 in this embodiment of this disclosure, refer to steps S100 to S101 in the embodiment of FIG. 1B, and details are not described herein again.

S302. Enable the fully autonomous driving mode when the trigger feature such as a startup feature of a second vehicle or a running feature of the second vehicle that is approaching the first vehicle is detected, and detect whether the first vehicle is on a driving path of the second vehicle.

In this embodiment of this disclosure, when parking at the first temporary parking space, the first vehicle may enable the detection sensor at a fixed time to detect whether there is the trigger feature in a current environment. If there is the startup feature of the second vehicle in the current environment, the fully autonomous driving mode of the first vehicle is controlled to be enabled. It should be noted that, the startup feature may be obtained by using a sound detection sensor. For example, when the sound detection sensor captures a sound feature of startup of a motor vehicle, it is determined in step S302 that there is the startup feature of the second vehicle in the current environment. In addition, the startup feature may alternatively be obtained by detecting energy by using an infrared sensor.

If the trigger feature existing in the current environment is the running feature of the second vehicle that is approaching the first vehicle, the fully autonomous driving mode of the first vehicle is controlled to be enabled. It should be noted that, a camera or radar of the first vehicle may be used to detect whether the distance between the second vehicle and the first vehicle is decreasing.

Based on the fully autonomous driving mode of the first vehicle, it is determined whether the first vehicle is on the driving path of the second vehicle. Specifically, the first vehicle may capture an image of the current environment by using the camera, analyze the image of the environment, and determine whether there is the second vehicle. Further, the first vehicle detect, by using the radar, whether a width of a road around the first vehicle is sufficient for the second vehicle to pass, and if the width of the road is not sufficient for the second vehicle to pass, determine that the first vehicle is on the driving path of the second vehicle.

S303. Obtain a size of the second vehicle and widths of the first vehicle and a driving road on which the first vehicle is currently located, if the first vehicle is on the driving path of the second vehicle.

In this embodiment of this disclosure, if the first vehicle is on the driving path of the second vehicle, the first vehicle may determine the size of the second vehicle according to an image of the second vehicle that is captured by using the camera. In addition, the first vehicle may determine, by using the radar or the camera, the width of the driving road on which the first vehicle is currently located.

S304. Determine a second temporary parking space according to the size of the second vehicle and the width of the driving road, so that the first vehicle does not block the second vehicle from passing through the driving road when being parked at the second temporary parking space.

S305. Move the first vehicle to the second temporary parking space.

In this embodiment of this disclosure, the first vehicle may determine the second temporary parking space according to the size of the second vehicle and the width of the current driving road. For example, the width of the current driving road is 8 meters, and the width of the second vehicle is 5 meters. To ensure passing of the second vehicle, the second temporary parking space that may be selected by the first vehicle should at least occupy a width less than or equal to 2.5 meters of the driving road, because a spacing of at least 0.5 meter needs to be reserved for ease of passing of the second vehicle.

Based on the fully autonomous driving mode of the first vehicle, the first vehicle moves from the first temporary parking space to the second temporary parking space.

According to the method shown in FIG. 3, a vehicle can autonomously switch between a temporary parking mode and a fully autonomous driving mode, so that not only movement of the vehicle can be autonomously controlled, but also power consumption can be reduced.

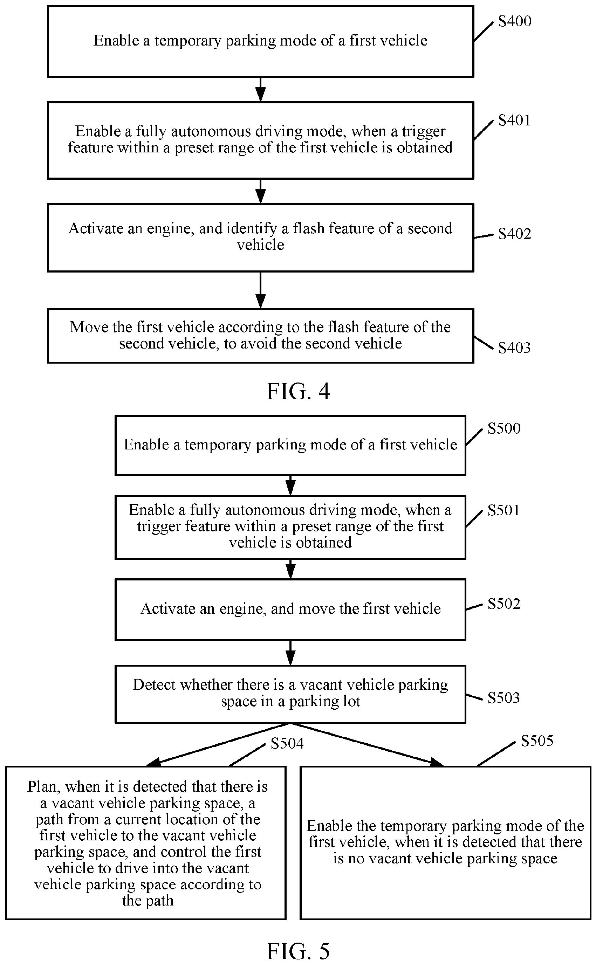

FIG. 4 is a flowchart of still another vehicle control method according to an embodiment of this disclosure. The method shown in FIG. 4 may be performed, for example, in a vehicle control apparatus 111. The method may include the following steps:
S400. Enable a temporary parking mode of a first vehicle, in the temporary parking mode, an engine of the first vehicle being in a sleep mode, and a detection sensor of the first vehicle being in an enabled mode.
S401. Enable a fully autonomous driving mode of the first vehicle, when a trigger feature within a preset range of the first vehicle is obtained by using the detection sensor.

For description of steps S400 to S401 in this embodiment of this disclosure, refer to steps S100 to S101 in the embodiment of FIG. 1B, and details are not described herein again.

S402. Activate an engine, and identify a flash feature of a second vehicle based on the fully autonomous driving mode of the first vehicle.

S403. Move the first vehicle according to the flash feature of the second vehicle, to avoid the second vehicle.

In this embodiment of this disclosure, when it is detected that the trigger feature in the current environment includes the flash feature of the second vehicle, the first vehicle controls and enable the fully autonomous driving mode. It should be noted that, the flash feature of the second vehicle may be detected by a camera of the first vehicle. For example, the camera captures an image of the preset range, analyzes the image, and determines whether there is the flash feature of the second vehicle.

The flash feature of the second vehicle may indicates that the second vehicle needs to pass by the first vehicle, and then the first vehicle autonomously identifies the flash feature and moves according to the flash feature. For example, the flash feature indicates that the second vehicle needs to turn right, and then the first vehicle may measure a width of a driving road on the right and determine whether the width is sufficient for the second vehicle to turn right and pass by the first vehicle.

FIG. 5 is a schematic flowchart of still another vehicle control method according to an embodiment of this disclosure. The method shown in FIG. 5 may be performed, for example, in a vehicle control apparatus 111. As shown in FIG. 5, the vehicle control method provided in this embodiment of this disclosure includes the following steps:
S500. Enable a temporary parking mode of a first vehicle, in the temporary parking mode, an engine of the first vehicle being in a sleep mode, and a detection sensor of the first vehicle being in an enabled mode, to detect whether there is a trigger feature within a preset range of the first vehicle.
S501. Enable a fully autonomous driving mode of the first vehicle, when the trigger feature within the preset range of the first vehicle is obtained.
S502. Activate the engine and move the first vehicle in the fully autonomous driving mode.

For description of steps S500 to S502 in this embodiment of this disclosure, refer to steps S100 to S102 in the embodiment of FIG. 1B, and details are not described herein again.

S503. Detect whether there is a vacant vehicle parking space in a parking lot based on the fully autonomous driving mode of the first vehicle.

In this embodiment of this disclosure, when the first vehicle is in the fully autonomous driving mode, the first vehicle may further detect whether there is a vacant vehicle parking space in the parking lot. For example, the first vehicle may capture an image of a current environment by using a camera, analyze the image, and determine whether there is a feature of a vacant vehicle parking space in the current environment. If there is the feature of the vacant vehicle parking space, it indicates that there is the vacant vehicle parking space.

It should be noted that, the first vehicle may scan, by using a fully autonomous driving system, an environment nearby while driving, to determine whether there is a vacant vehicle parking space.

S504. Plan, if there is a vacant vehicle parking space, a path from a current location of the first vehicle to the vacant vehicle parking space, and control the first vehicle to drive into the vacant vehicle parking space according to the path.

In this embodiment of this disclosure, if it is detected that there is a vacant vehicle parking space, the autonomous driving system may plan the path from the current location of the first vehicle to the vacant vehicle parking space. In an embodiment, the first vehicle may send an identifier of the vacant vehicle parking space and the location of the first vehicle to the server 120, and the server 120 plans the path from the first vehicle to the vacant vehicle parking space. After obtaining the path from the current location of the first vehicle to the vacant vehicle parking space, the first vehicle may drive into the vacant vehicle parking space according to the path.

After the first vehicle drives into the vacant vehicle parking space, the autonomous driving system sends a location of the vacant vehicle parking space to a target user. The target user may be a user bound with the first vehicle, for example, a mobile terminal of a driver of the first vehicle. In this way, it is convenient for the driver to learn of a specific location of the first vehicle.

After the first vehicle parks at the vacant vehicle parking space, the autonomous driving system and all detection sensors of the first vehicle are disabled.

S505. Enable the temporary parking mode of the first vehicle if there is no vacant vehicle parking space.

In this embodiment of this disclosure, when the first vehicle detects that there is still no vacant vehicle parking space, the first vehicle switches again from the fully autonomous driving mode to the temporary parking mode, that is, re-enables the temporary parking mode of the first vehicle, and enables the detection sensors of the first vehicle to continue to detect whether there is the trigger feature in the current environment.

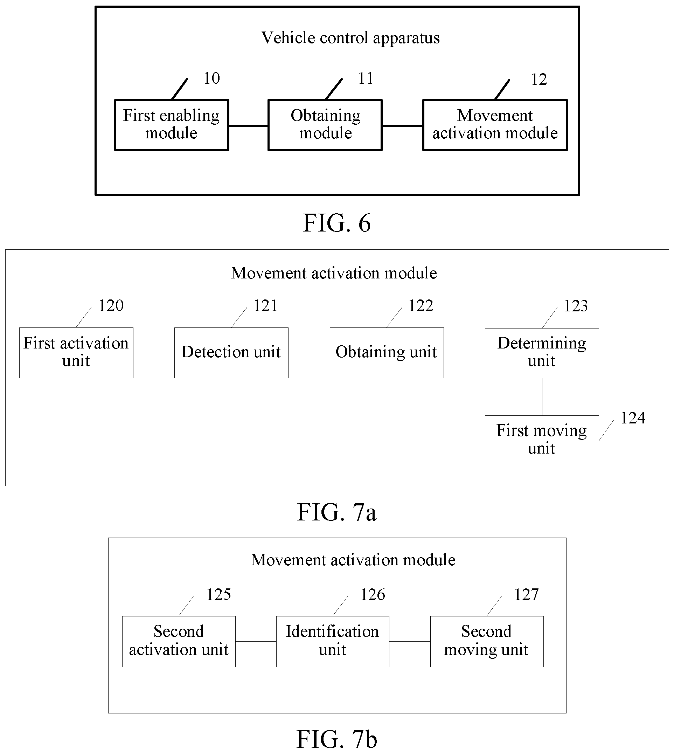

FIG. 6 is a schematic structural diagram of a vehicle control apparatus according to an embodiment of this disclosure. As shown in the figure, the vehicle control apparatus in this embodiment of this disclosure includes:
a first enabling module 10, configured to enable a temporary parking mode of a first vehicle, in the temporary parking mode, an engine of the first vehicle being in a sleep mode, and a detection sensor of the first vehicle being in an enabled mode; and
a first obtaining module 11, configured to obtain a trigger feature within a preset range of the first vehicle, the trigger feature being used for triggering the first vehicle to enable a fully autonomous driving mode of the first vehicle.

The trigger feature includes at least one or more of the following features:
a startup feature of a second vehicle within the preset range;
a running feature of the second vehicle that is approaching the first vehicle within the preset range; and
a flash feature of the second vehicle within the preset range.

It should be noted that, the second vehicle in this embodiment of this disclosure is any vehicle other than the first vehicle.

A movement activation module 12 is configured to activate the engine, and move the first vehicle in the fully autonomous driving mode.

If the trigger feature includes the startup feature of the second vehicle, or the trigger feature includes the running feature of the second vehicle that is approaching the first vehicle, as shown in FIG. 7a, the movement activation module 12 includes a first activation unit 120, a detection unit 121, an obtaining unit 122, a determining unit 123, and a first moving unit 124.

The first activation unit 120 is configured to activate the engine.

The detection unit 121 is configured to detect whether the first vehicle is on a driving path of the second vehicle based on the fully autonomous driving mode of the first vehicle.

The obtaining unit 122 is configured to obtain a size of the second vehicle and widths of the first vehicle and a driving road on which the first vehicle is currently located, if the first vehicle is on the driving path of the second vehicle.

The determining unit 123 is configured to determine a second temporary parking space according to the size of the second vehicle and the width of the driving road, so that the first vehicle does not block the second vehicle from passing through the driving road when being parked at the second temporary parking space.

The first moving unit 124 is configured to move the first vehicle to the second temporary parking space.

If the trigger feature includes the flash feature of the second vehicle, as shown in FIG. 7b, the movement activation module includes a second activation unit 125, an identification unit 126, and a second moving unit 127.

The second activation unit 125 is configured to activate the engine.

The identification unit 126 is configured to identify the flash feature of the second vehicle based on the fully autonomous driving mode of the first vehicle.

The second moving unit 127 is configured to move the first vehicle according to the flash feature of the second vehicle, to avoid the second vehicle.

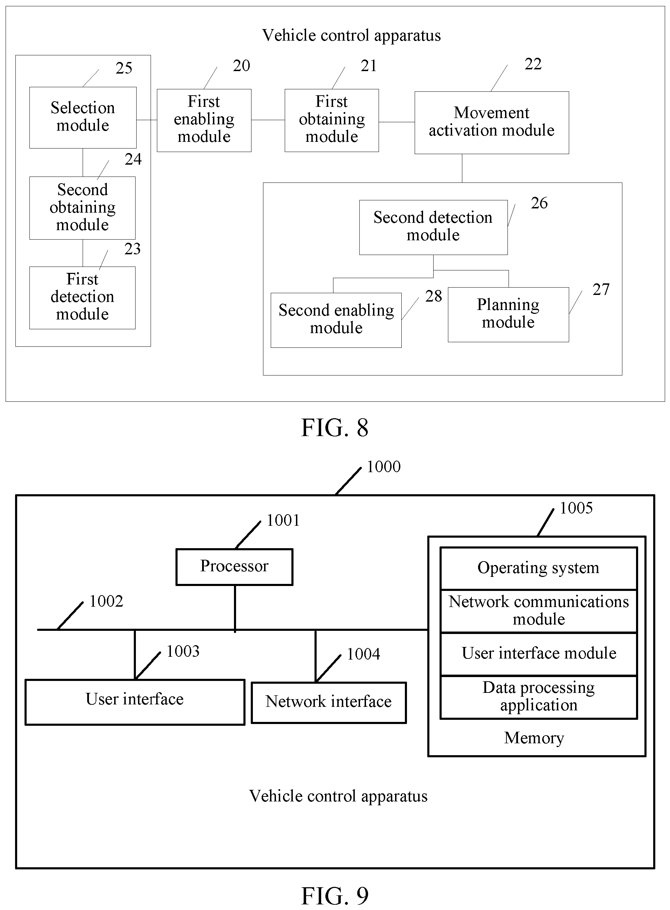

FIG. 8 is a schematic structural diagram of another vehicle control apparatus according to an embodiment of this disclosure. As shown in the figure, the vehicle control apparatus in this embodiment of this disclosure includes a first enabling module 20, a first obtaining module 21, and a movement activation module 22.

As shown in FIG. 8, the vehicle control apparatus in this embodiment of this disclosure may further include a first detection module 23, a second obtaining module 24, and a selection module 25.

The first detection module 23 is configured to detect, when a first vehicle arrives at a parking lot, whether there is a vacant vehicle parking space in the parking lot.

The second obtaining module 24 is configured to obtain vacant spaces in the parking lot, if there is no vacant vehicle parking space in the parking lot.

The selection module 25 is configured to select, according to a size of the first vehicle, a first temporary parking space from the vacant spaces for parking.

As shown in FIG. 8, the vehicle control apparatus in this embodiment of this disclosure may further include a second detection module 26, a planning module 27, and a second enabling module 28.

The second detection module 26 is configured to detect whether there is a vacant vehicle parking space in the parking lot based on the fully autonomous driving mode of the first vehicle.

The planning module 27 is configured to: plan, if there is a vacant vehicle parking space, a path from a current location of the first vehicle to the vacant vehicle parking space; and control the first vehicle to drive into the vacant vehicle parking space according to the path.

The second enabling module 28 is configured to enable the temporary parking mode of the first vehicle, if there is no vacant vehicle parking space.

FIG. 9 is a schematic structural diagram of still another vehicle control apparatus according to an embodiment of this disclosure. As shown in FIG. 9, the vehicle control apparatus 1000 may include at least one processor 1001 such as a CPU, at least one network interface 1004, a user interface 1003, a memory 1005, and at least one communications bus 1002. The communications bus 1002 is configured to implement connection communication between the components. A user may invoke the user interface 1003 to implement communication with the vehicle control apparatus, and optionally, the user interface 1003 may include a key, a touchscreen, and the like. Optionally, the network interface 1004 may include a standard wired interface and a standard wireless interface (such as a Wi-Fi interface). The memory 1005 may be a high-speed RAM memory, or may be a non-volatile memory (non-volatile memory), for example, at least one magnetic disk memory. The memory 1005 may further be at least one storage apparatus that is located far away from the processor 1001. As shown in FIG. 8, the memory 1005, as a computer storage medium, may include an operating system, a network communications module, a user interface module, and a data processing disclosure.

In the vehicle control apparatus 1000 shown in FIG. 9, the processor 1001 may be configured to invoke the data processing disclosure stored in the memory 1005, and specifically perform the following operations:
enabling a temporary parking mode of a first vehicle, in the temporary parking mode, an engine of the first vehicle being in a sleep mode, and a detection sensor of the first vehicle being in an enabled mode, to detect whether there is a trigger feature within a preset range of the first vehicle;
enabling a fully autonomous driving mode of the first vehicle, when the trigger feature within the preset range of the first vehicle is obtained; and
activating the engine and moving the first vehicle in the fully autonomous driving mode.

Before the execution of enabling a temporary parking mode of a first vehicle, the processor may further perform the following operations:
detecting, when the first vehicle arrives at a parking lot, whether there is a vacant vehicle parking space in the parking lot;
obtaining vacant spaces in the parking lot, if there is no vacant vehicle parking space in the parking lot; and
selecting, according to a size of the first vehicle, a first temporary parking space from the vacant spaces for parking.

The trigger feature includes at least one or more of the following features:
a startup feature of a second vehicle within the preset range;
a running feature of the second vehicle that is approaching the first vehicle within the preset range; and
a flash feature of the second vehicle within the preset range.

The execution of moving the first vehicle in the fully autonomous driving mode specifically includes:
detecting whether the first vehicle is on a driving path of a second vehicle based on the fully autonomous driving mode of the first vehicle;
obtaining a size of the second vehicle and widths of the first vehicle and a driving road on which the first vehicle is currently located, if the first vehicle is on the driving path of the second vehicle;
determining a second temporary parking space according to the size of the second vehicle and the width of the driving road, so that the first vehicle does not block the second vehicle from passing through the driving road when being parked at the second temporary parking space; and
moving the first vehicle to the second temporary parking space.

If the trigger feature includes the flash feature of the second vehicle, the moving the first vehicle in the fully autonomous driving mode specifically includes:
identifying the flash feature of the second vehicle based on the fully autonomous driving mode of the first vehicle; and
moving the first vehicle according to the flash feature of the second vehicle, to avoid the second vehicle.

After the execution of enabling a fully autonomous driving mode of the first vehicle, the vehicle control apparatus 1000 may further perform the following operations:
detecting whether there is a vacant vehicle parking space in the parking lot based on the fully autonomous driving mode of the first vehicle; and
planning, if there is a vacant vehicle parking space, a path from a current location of the first vehicle to the vacant vehicle parking space; and controlling the first vehicle to drive into the vacant vehicle parking space according to the path; or
enabling the temporary parking mode of the first vehicle, if there is no vacant vehicle parking space.

## Claims

1. A vehicle control method, applied to a vehicle control apparatus, and comprising:
detecting, when a first vehicle arrives at a parking lot, whether there is a vacant vehicle parking space in the parking lot (S200); **characterised by** further comprising:
obtaining vacant spaces in the parking lot, when it is detected that there is no vacant vehicle parking space in the parking lot (S201);
selecting, according to a size of the first vehicle, a first temporary parking space from the vacant spaces for parking (S202), and moving the first vehicle to the first temporary parking space to perform an operation of enabling the temporary parking mode of the first vehicle;
enabling a temporary parking mode of the first vehicle (S203), in the temporary parking mode, an engine of the first vehicle being in a sleep mode, and a detection sensor of the first vehicle being in an enabled mode;
enabling a fully autonomous driving mode of the first vehicle, when a trigger feature within a preset range of the first vehicle is obtained by using the detection sensor (S204); and
activating the engine and moving the first vehicle in the fully autonomous driving mode (S205), wherein the method comprises outputting voice prompt information, when it is detected, by using the detection sensor of the first vehicle, that a person approaches, the voice prompt information being used for prompting the first vehicle to move for avoidance.

2. The method according to claim 1, wherein the trigger feature comprises at least one or more of following features:
a startup feature of a second vehicle within the preset range;
a running feature of the second vehicle that is approaching the first vehicle within the preset range; and
a flash feature of the second vehicle within the preset range.

3. The method according to claim 1, wherein the moving the first vehicle comprises:
detecting whether the first vehicle is on a driving path of a second vehicle (S302);
obtaining a size of the second vehicle and widths of the first vehicle and a driving road on which the first vehicle is currently located, when it is detected that the first vehicle is on the driving path of the second vehicle (S303);
determining a second temporary parking space according to the size of the second vehicle and the width of the driving road (S304), the second temporary parking space being capable of accommodating the first vehicle so that the first vehicle does not block the second vehicle from passing through the driving road; and
moving the first vehicle to the second temporary parking space (S305).

4. The method according to claim 1, wherein the trigger feature comprises a flash feature of a second vehicle, and the moving the first vehicle comprises:
predicting a moving path of the second vehicle according to the flash feature; and
moving the first vehicle according to the moving path, to avoid the second vehicle.

5. The method according to claim 1, further comprising:
planning, when it is detected that there is a vacant vehicle parking space, a path from a current location of the first vehicle to the vacant vehicle parking space; and
controlling the first vehicle to drive into the vacant vehicle parking space according to the path (S504).

6. The method according to claim 3, wherein the detecting whether the first vehicle is on a driving path of a second vehicle comprises:
capturing an image by using a camera; and
analyzing the captured image, and determining whether the first vehicle blocks the driving path of the second vehicle.

7. The method according to claim 6, wherein the determining whether the first vehicle blocks the driving path of the second vehicle comprises:
measuring a width of a vacant space around the first vehicle by using radar; and
determining, according to a width of the second vehicle and the width of the vacant space around the first vehicle, whether the first vehicle blocks the driving path of the second vehicle.

8. The method according to claim 5, wherein the detecting whether there is a vacant vehicle parking space in the parking lot comprises:
capturing an image of a current environment by using a camera; and
analyzing the image of the current environment, and determining whether there is a feature of a vacant vehicle parking space in the current environment.

9. The method according to claim 8, wherein the detecting whether there is a vacant vehicle parking space in the parking lot further comprises:
detecting whether there is an obstacle in the vacant vehicle parking space by using radar, when it is determined that there is the feature of the vacant vehicle parking space.

10. The method according to claim 8, wherein the image of the current environment comprises an image of an exit of the parking lot; and the analyzing the image of the current environment, and determining whether there is a feature of a vacant vehicle parking space in the current environment comprises:
analyzing the image of the exit of the parking lot, to determine whether a vehicle has left the parking lot; and
determining that there is the feature of the vacant vehicle parking space in the current environment, when it is determined that a vehicle has left the parking lot.

11. The method according to claim 5, wherein the planning a path from a current location of the first vehicle to the vacant vehicle parking space comprises:
sending an identifier of the vacant vehicle parking space and the location of the first vehicle to a server, so that the server plans the path from the first vehicle to the vacant vehicle parking space; and
obtaining the path from the server.

12. A vehicle control apparatus, comprising a processor and a memory, the memory storing a computer-readable instruction that causes the processor to perform the method claimed in any one of claims 1 to 11.

13. A non-volatile storage medium, storing one or more programs, the one or more programs comprising instructions, and when being executed by a vehicle control apparatus, the instructions causing the vehicle control apparatus to execute the method according to any one of claims 1 to 11.

## Patentansprüche

1. Fahrzeug-Steuerverfahren, angewandt auf eine Fahrzeugsteuereinrichtung und Folgendes umfassend:
Erkennen, ob ein freier Fahrzeug-Parkplatz auf einem Parkplatzgelände vorhanden ist, wenn ein erstes Fahrzeug an dem Parkplatzgelände ankommt (S200),
Ermitteln freier Plätze auf dem Parkplatzgelände, wenn erkannt wird, dass auf dem Parkplatzgelände kein freier Fahrzeug-Parkplatz vorhanden ist (S201),
Auswählen eines ersten temporären Parkplatzes aus den freien Parkplätzen gemäß einer Größe des ersten Fahrzeugs (S202) und Bewegen des ersten Fahrzeugs zu dem ersten temporären Parkplatz, um eine Operation des Einschaltens des Modus temporären Parkens des ersten Fahrzeugs durchzuführen,
Einschalten eines Modus temporären Parkens des ersten Fahrzeugs (S203), wobei in dem Modus temporären Parkens ein Motor des ersten Fahrzeugs in einem Ruhemodus ist und ein Erkennungssensor des ersten Fahrzeugs in einem eingeschalteten Modus ist,
Einschalten eines Modus vollständigen autonomen Fahrens des ersten Fahrzeugs, wenn mit Hilfe des Erkennungssensors ein Auslösemerkmal in einem voreingestellt Bereich um das erste Fahrzeug ermittelt wird (S204), und
Aktivieren des Motors und Bewegen des ersten Fahrzeugs in einem Modus vollständigen autonomen Fahrens (S205), wobei das Verfahren das Ausgeben von Sprachaufforderungsinformationen umfasst, wenn mit Hilfe des Erkennungssensors des ersten Fahrzeugs erkannt wird, dass sich eine Person nähert, wobei die Sprachaufforderungsinformationen verwendet werden, um das erste Fahrzeugs aufzufordern, sich zwecks Ausweichens zu bewegen.

2. Verfahren nach Anspruch 1, wobei das Auslösemerkmal mindestens eines oder mehrere der folgenden Merkmale umfasst:
ein Merkmal des Anlassens eines zweiten Fahrzeugs in dem voreingestellten Bereich,
ein Merkmal des Fahrens des zweiten Fahrzeugs, das sich dem ersten Fahrzeugs nähert, in dem voreingestellten Bereich und
ein Merkmal des Blinkens des zweiten Fahrzeugs in dem voreingestellten Bereich.

3. Verfahren nach Anspruch 1, wobei das Bewegen des ersten Fahrzeugs Folgendes umfasst:
Erkennen, ob sich das erste Fahrzeug auf einem Fahrweg des zweiten Fahrzeugs befindet (S302),
Ermitteln einer Größe des zweiten Fahrzeugs und der Breiten des ersten Fahrzeugs und einer Fahrstraße, auf der sich das erste Fahrzeug gegenwärtig befindet, wenn erkannt wird, dass sich das erste Fahrzeug auf dem Fahrweg des zweiten Fahrzeugs befindet (S303),
Bestimmen eines zweiten temporären Parkplatzes gemäß der Größe des zweiten Fahrzeugs und der Breite der Fahrstraße (S304), wobei der zweite temporäre Parkplatz dazu geeignet ist, das erste Fahrzeug aufzunehmen, so dass das erste Fahrzeug dem zweiten Fahrzeug nicht die Durchfahrt auf der Fahrstraße versperrt, und
Bewegen des ersten Fahrzeugs zu dem zweiten temporären Parkplatz (S305).

4. Verfahren nach Anspruch 1, wobei das Auslösemerkmal ein Merkmal des Blinkens eines zweiten Fahrzeugs umfasst und das Bewegen des ersten Fahrzeugs Folgendes umfasst:
Vorhersagen eines Bewegungsweges des zweiten Fahrzeugs gemäß dem Merkmal des Blinkens und
Bewegen des ersten Fahrzeugs gemäß dem Bewegungsweg, um dem zweite Fahrzeug auszuweichen.

5. Verfahren nach Anspruch 1, ferner Folgendes umfassend:
Planen eines Weges von einem gegenwärtigen Standort des ersten Fahrzeugs zu dem freien Fahrzeug-Parkplatz, wenn erkannt wird, das ein freier Fahrzeug-Parkplatz vorhanden ist, und
Steuern des ersten Fahrzeugs, gemäß dem Weg in den freien Fahrzeug-Parkplatz zu fahren (S504).

6. Verfahren nach Anspruch 3, wobei das Erkennen, ob sich das erste Fahrzeug auf einem Fahrweg eines zweiten Fahrzeugs befindet, Folgendes umfasst:
Aufnehmen eines Bildes mit Hilfe einer Kamera und
Analysieren des aufgenommenen Bildes und Bestimmen, ob das erste Fahrzeug den Fahrweg des zweiten Fahrzeugs versperrt.

7. Verfahren nach Anspruch 6, wobei das Bestimmen, ob das erste Fahrzeug den Fahrweg des zweiten Fahrzeugs versperrt, Folgendes umfasst:
Messen einer Breite eines freien Raumes rings um das erste Fahrzeug mit Hilfe von Radar und
Bestimmen, ob das erste Fahrzeug den Fahrweg des zweiten Fahrzeugs versperrt, gemäß einer Breite des zweiten Fahrzeugs und der Breite des freien Raumes rings um das erste Fahrzeug

8. Verfahren nach Anspruch 5, wobei das Erkennen, ob auf dem Parkplatzgelände ein freier Fahrzeug-Parkplatz vorhanden ist, Folgendes umfasst:
Aufnehmen eines Bildes einer gegenwärtigen Umgebung mit Hilfe einer Kamera und
Analysieren des Bildes der gegenwärtigen Umgebung und Bestimmen, ob ein Merkmal eines freien Fahrzeug-Parkplatzes in der gegenwärtigen Umgebung vorhanden ist.

9. Verfahren nach Anspruch 8, wobei das Erkennen, ob auf dem Parkplatzgelände ein freier Fahrzeug-Parkplatz vorhanden ist, Folgendes umfasst:
Erkennen, ob auf dem freien Fahrzeug-Parkplatz ein Hindernis vorhanden ist, mit Hilfe von Radar, wenn bestimmt wird, dass das Merkmal des freien Fahrzeug-Parkplatzes vorhanden ist.

10. Verfahren nach Anspruch 8, wobei das Bild der gegenwärtigen Umgebung ein Bild einer Ausfahrt des Parkplatzgeländes umfasst und das Analysieren des Bildes der gegenwärtigen Umgebung und das Bestimmen, ob ein Merkmal eines freien Fahrzeug-Parkplatzes in der gegenwärtigen Umgebung vorhanden ist, Folgendes umfasst:
Analysierend des Bildes der Ausfahrt des Parkplatzgeländes, um zu bestimmen, ob ein Fahrzeug das Parkplatzgelände verlassen hat, und
Bestimmen, dass das Merkmal des freien Fahrzeug-Parkplatzes in der gegenwärtigen Umgebung vorhanden ist, wenn bestimmt wird, dass ein Fahrzeug das Parkplatzgelände verlassen hat.

11. Verfahren nach Anspruch 5, wobei das Planen eines Weges von einem gegenwärtigen Standort des ersten Fahrzeugs zu dem freien Fahrzeug-Parkplatz Folgendes umfasst:
Senden einer Kennung des freien Fahrzeug-Parkplatzes und des Standortes des ersten Fahrzeugs an einen Server, so dass der Server den Weg von dem ersten Fahrzeug zu dem freien Fahrzeug-Parkplatz plant, und
Beziehen des Weges von dem Server.

12. Fahrzeugsteuervorrichtung, einen Prozessor und einen Speicher umfassend, wobei der Speicher einen computerlesbaren Befehl speichert, der den Prozessor veranlasst, das Verfahren nach einem der Ansprüche 1 bis 11 auszuführen.

13. Nicht-flüchtiges Speichermedium, das ein oder mehrere Programme speichert, wobei das eine oder die mehreren Programme Befehle umfassen, wobei die Befehle bei Ausführung durch eine Fahrzeugsteuervorrichtung die Fahrzeugsteuervorrichtung veranlassen, das Verfahren nach einem der Ansprüche 1 bis 11 auszuführen.

## Revendications

1. Procédé de commande de véhicule, appliqué à un appareil de commande de véhicule, et comprenant :
la détection, lorsqu'un premier véhicule arrive sur un parc de stationnement, s'il y a une place de stationnement de véhicule vacante dans le parc de stationnement (S200) ;
**caractérisé en ce qu'**il comprend en outre :
l'obtention de places vacantes dans le parc de stationnement lorsqu'il est détecté qu'il n'y a pas de place de stationnement de véhicule vacante dans le parc de stationnement (S201) ;
la sélection, en fonction d'une taille du premier véhicule, d'une première place de stationnement temporaire à partir des places vacantes pour le stationnement (S202), et le déplacement du premier véhicule vers la première place de stationnement temporaire pour réaliser une opération consistant à permettre le mode de stationnement temporaire pour le premier véhicule ;
l'autorisation d'un mode de stationnement temporaire du premier véhicule (S203) , dans le mode de stationnement temporaire, un moteur du premier véhicule étant dans un mode veille et un capteur de détection du premier véhicule étant dans un mode activé ;
l'autorisation d'un mode de conduite entièrement autonome du premier véhicule lorsqu'une caractéristique de déclenchement dans les limites d'une plage prédéfinie du premier véhicule est obtenue en utilisant le capteur de détection (S204) ; et
l'activation du moteur et le déplacement du premier véhicule dans le mode de conduite entièrement autonome (S205), dans lequel le procédé comprend la sortie d'une information d'invite vocale lorsqu'il est détecté, en utilisant le capteur de détection du premier véhicule, qu'une personne approche, l'information d'invite vocale étant utilisée pour inciter le premier véhicule à se déplacer pour un évitement.

2. Procédé selon la revendication 1, dans lequel la caractéristique de déclenchement comprend au moins une ou plusieurs des caractéristiques suivantes :
une caractéristique de démarrage d'un deuxième véhicule dans les limites d'une plage prédéfinie ;
une caractéristique de marche du deuxième véhicule qui approche du premier véhicule dans les limites de la plage prédéfinie ; et
une caractéristique de clignotement du deuxième véhicule dans les limites de la plage prédéfinie.

3. Procédé selon la revendication 1, dans lequel le déplacement du premier véhicule comprend :
la détection si le premier véhicule est sur une voie de circulation du deuxième véhicule (S302) ;
l'obtention d'une taille du deuxième véhicule et de largeurs du premier véhicule et d'une route de circulation sur laquelle le premier véhicule se trouve actuellement lorsqu'il est détecté que le premier véhicule est sur la voie de circulation du deuxième véhicule (S303) ;
la détermination d'une deuxième place de stationnement temporaire en fonction de la taille du deuxième véhicule et de la largeur de la route de circulation (S304), la deuxième place de stationnement temporaire étant capable d'accueillir le premier véhicule de sorte que le premier véhicule ne bloque pas le passage du deuxième véhicule sur la route de circulation ; et
le déplacement du premier véhicule vers la deuxième place de stationnement temporaire (S305).

4. Procédé selon la revendication 1, dans lequel la caractéristique de déclenchement comprend une caractéristique de clignotement d'un deuxième véhicule, et le déplacement du premier véhicule comprend :
la prédiction d'un trajet de déplacement du deuxième véhicule en fonction de la caractéristique de clignotement ; et
le déplacement du premier véhicule en fonction du trajet de déplacement pour éviter le deuxième véhicule.

5. Procédé selon la revendication 1, comprenant en outre :
la planification, lorsqu'il est détecté qu'il y a une place de stationnement de véhicule vacante, d'un trajet d'un emplacement actuel du premier véhicule jusqu'à la place de stationnement de véhicule vacante ; et
la commande du premier véhicule pour la conduite jusqu'à la place de stationnement de véhicule vacante en fonction du trajet (S504).

6. Procédé selon la revendication 3, dans lequel la détection quant à savoir si le premier véhicule est sur une voie de circulation d'un deuxième véhicule comprend :
la capture d'une image en utilisant une caméra ; et
l'analyse de l'image capturée et la détermination si le premier véhicule bloque la voie de circulation du deuxième véhicule.

7. Procédé selon la revendication 6, dans lequel la détermination si le premier véhicule bloque la voie de circulation du deuxième véhicule comprend :
la mesure d'une largeur d'un espace vacant autour du premier véhicule en utilisant un radar ; et
la détermination, en fonction d'une largeur du deuxième véhicule et de la largeur de l'espace vacant autour du premier véhicule, si le premier véhicule bloque la voie de circulation du deuxième véhicule.

8. Procédé selon la revendication 5, dans lequel la détection quant à savoir s'il y a une place de stationnement de véhicule vacante dans le parc de stationnement comprend :
la capture d'une image d'un environnement actuel en utilisant une caméra ; et
l'analyse de l'image de l'environnement actuel et la détermination s'il y a une caractéristique de place de stationnement de véhicule vacante dans l'environnement actuel.

9. Procédé selon la revendication 8, dans lequel la détection s'il y a une place de stationnement de véhicule vacante dans le parc de stationnement comprend en outre :
la détection s'il y a un obstacle dans la place de stationnement de véhicule vacante en utilisant un radar lorsqu'il est déterminé qu'il y a la caractéristique de place de stationnement de véhicule vacante.

10. Procédé selon la revendication 8, dans lequel l'image de l'environnement actuel comprend une image d'une sortie du parc de stationnement ; et l'analyse de l'image de l'environnement actuel, et la détermination s'il y a une caractéristique de place de stationnement de véhicule vacante dans l'environnement actuel comprend :
l'analyse de l'image de la sortie du parc de stationnement pour déterminer si un véhicule a quitté le parc de stationnement ; et
la détermination qu'il y a la caractéristique de place de stationnement de véhicule vacante dans l'environnement actuel lorsqu'il est déterminé qu'un véhicule a quitté le parc de stationnement.

11. Procédé selon la revendication 5, dans lequel la planification d'un trajet d'un emplacement actuel du premier véhicule jusqu'à la place de stationnement de véhicule vacante comprend :
l'envoi d'un identifiant de la place de stationnement de véhicule vacante et de l'emplacement du premier véhicule à un serveur, de sorte que le serveur planifie le trajet du premier véhicule vers la place de stationnement de véhicule vacante ; et
l'obtention du trajet de la part du serveur.

12. Appareil de commande de véhicule, comprenant un processeur et une mémoire, la mémoire stockant une instruction lisible par ordinateur qui fait en sorte que le processeur met en œuvre le procédé revendiqué par l'une quelconque des revendications 1 à 11.

13. Support de stockage non volatile lisible par ordinateur, stockant un ou plusieurs programmes, ce ou ces programmes comprenant des instructions, et lorsqu'elles sont exécutées par un appareil de commande de véhicule, les instructions faisant en sorte que l'appareil de commande de véhicule exécute un procédé selon l'une quelconque des revendications 1 à 11.
